(19) Europäisches Patentamt
European Patent Office
Office européen des brevets

(11) **EP 4 141 707 B1**

(12) **EUROPEAN PATENT SPECIFICATION**

(45) Date of publication and mention
of the grant of the patent:
**21.01.2026 Bulletin 2026/04**

(51) International Patent Classification (IPC):
**G06F 17/11** (2006.01)    **G06F 30/20** (2020.01)
**G06F 3/0481** (2022.01)

(21) Application number: **22184249.5**

(52) Cooperative Patent Classification (CPC):
**G06F 3/0481; G06N 7/01**

(22) Date of filing: **12.07.2022**

(54) **METHOD AND APPARATUS WITH DATA EXPLORATION**

VERFAHREN UND VORRICHTUNG MIT DATENEXPLORATION

PROCÉDÉ ET APPAREIL D'EXPLORATION DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2021 KR 20210113926**

(43) Date of publication of application:
**01.03.2023 Bulletin 2023/09**

(73) Proprietor: **Samsung Electronics Co., Ltd.**
**Suwon-si, Gyeonggi-do 16677 (KR)**

(72) Inventors:
• **SONG, Inchul**
**16678 Suwon-si (KR)**
• **KIM, Hyuk**
**16678 Suwon-si (KR)**
• **PARK, Sangwuk**
**16678 Suwon-si (KR)**
• **LEE, Jun Haeng**
**16678 Suwon-si (KR)**
• **CHO, Sungil**
**16678 Suwon-si (KR)**
• **YOU, Kaeweon**
**16678 Suwon-si (KR)**

(74) Representative: **Grünecker Patent- und Rechtsanwälte**
**PartG mbB**
**Leopoldstraße 4**
**80802 München (DE)**

(56) References cited:
**US-A1- 2018 356 949    US-A1- 2019 171 776**

• **YUE YONGHAO ET AL: "User interfaces for high-dimensional design problems from theories to implementations", ADJUNCT PROCEEDINGS OF THE 29TH ACM CONFERENCE ON USER MODELING, ADAPTATION AND PERSONALIZATION, ACMPUB27, NEW YORK, NY, USA, 9 August 2021 (2021-08-09), pages 1 - 34, XP058757831, ISBN: 978-1-4503-8376-9, DOI: 10.1145/3450508.3464551**

**Description**

BACKGROUND

1. Field

The following description relates to a method and apparatus with data exploration.

2. Description of Related Art

An issue of function optimization is to find an input that maximizes a given objective function. However, the exact form of the objective function may be unknown, and it may be expensive to evaluate a function value for a given input value. Using an optimization method, an optimal solution may be quickly derived at a low cost. For example, Bayesian optimization may derive an optimal solution using a surrogate function that models an objective function based on a sample evaluation, and an acquisition function that determines a next evaluation point based on the model. The Bayesian optimization may reduce costs and time for optimization by reducing the number of evaluations.
YUE YONGHAO ET AL: "User interfaces for high-dimensional design problems from theories to implementations", Adjunct Proceedings Of The 29th ACM Conference On User Modeling, Adaptation And Personalization, ACMPUB27, New York, NY, USA, 9 August 2021, pages 1-34, XP058757831, DOI: 10.1145/3450508.3464551 ISBN: 978-1-4503-8376-9 is directed to techniques for effectively performing tasks encompassing manipulation or exploration in high-dimensional spaces by a user using user interfaces. The solution proposed in YUE YONGHAO ET AL for such tasks formulated as optimization problem is to bypass direct manipulation of the too large number of control parameters for a user to handle by extracting much lower-dimensional meaningful subspaces. For extracting such subspaces, YUE YONGHAO ET AL also mentions using Bayesian optimization, in which current data is used to iteratively estimate a shape of an objective function as reasonably as possible.
It is the object of the present application to provide an apparatus and a method that enable optimizing a design and process development of a semiconductor product in an efficient way.
This object is solved by the subject matter of the independent claims.
Preferred embodiments are defined in the dependent claims.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.
The invention is claimed in the independent claims. Preferred embodiments are specified in the dependent claims.
In one general aspect, a processor-implemented method with data exploration includes: setting first input data and a first target condition; predicting first output data corresponding to the first input data using a first function that models an objective function; and determining second input data using a second function that provides a result of comparison between the first output data and the first target condition.
The first target condition may include a first target value, and the determining of the second input data may include determining, to be the second input data, input data that derives, using the first function, output data closer to the target value compared to the first output data.
The first target condition may include a first target range, and the determining of the second input data may include determining, to be the second input data, input data that derives, using the first function, output data within the first target range in response to the first output data not being within the first target range.
The first target condition may include a first target value, and the second function may include a first component corresponding to a difference between a mean value of the first output data and the first target value and a second component corresponding to a standard deviation value of the first output data.
The determining of the second input data may include determining the second input data by applying different weights to the first component and the second component.
Input data may be repetitively determined through gradual target conditions comprising the first target condition.
The method may include: setting a second target condition; predicting second output data corresponding to the second input data using the first function; and determining third input data using the second function.
The method may include providing a user interface, wherein the user interface may include: a first section configured to display a plurality of points of reference (PORs) corresponding to different input data and to receive a first user input of selecting a first POR corresponding to the first input data among the plurality of PORs; a second section configured to display the first input data corresponding to the first user input and to receive a second user input of modifying the first input data; a third section configured to display the first output data based on the first function; a fourth section configured to display a settable condition and to receive a third user input of setting the first target condition; and a fifth section configured to display recommended input data comprising the second input data based on the second function.

The third section may include a first graph representing the first output data according to the first input data, and, in response to the first input data being modified according to the second user input, the first output data may be changed based on the first function, and the first graph may be updated based on the modified first input data and the changed first output data.

The fifth section may include a second graph representing a degree of target achievement and uncertainty of each recommended input data, and, in response to recommended input data corresponding to the second input data being selected from the second graph, the second section and the third section may be updated based on the second input data.

In another general aspect, one or more embodiments include a non-transitory computer-readable storage medium storing instructions that, when executed by one or more processors, configure the one or more processors to perform any one, any combination, or all operations and methods described herein.

In another general aspect, an apparatus with data exploration includes: one or more processors configured to: set first input data and a first target condition based on a first user input applied through a user interface; predict first output data corresponding to the first input data using a first function that models an objective function; display the first output data through the user interface; determine recommended input data using a second function that provides a result of comparison between the first output data and the first target condition; display the recommended input data through the user interface; and determine second input data based on a second user input applied through the user interface.

The first target condition may include a first target value, and, for the determining of the second input data, the one or more processors may be configured to determine, to be the second input data, input data that derives, using the first function, output data closer to the target value compared to the first output data.

The first target condition may include a first target range, and, for the determining of the second input data, the one or more processors may be configured to determine, to be the second input data, input data that derives, using the first function, output data within the first target range in response to the first output data not being within the first target range.

The first target condition may include a first target value, the second function may include a first component corresponding to a difference between a mean value of the first output data and the first target value and a second component corresponding to a standard deviation value of the first output data, and, for the determining of the second input data, the one or more processors may be configured to determine the second input data by applying different weights to the first component and the second component.

In another general aspect, an apparatus with data exploration includes: one or more processors configured to: set first input data and a first target condition; predict first output data corresponding to the first input data using a first function that models an objective function; and determine second input data using a second function that provides a result of comparison between the first output data and the first target condition.

The first target condition may include a first target value, and, for the determining of the second input data, the one or more processors may be configured to determine, to be the second input data, input data that derives, using the first function, output data closer to the target value compared to the first output data.

The first target condition may include a first target range, and, for the determining of the second input data, the one or more processors may be configured to determine, to be the second input data, input data that derives, using the first function, output data within the first target range in response to the first output data not being within the first target range.

The first target condition may include a first target value, the second function may include a first component corresponding to a difference between a mean value of the first output data and the first target value and a second component corresponding to a standard deviation value of the first output data, and, for the determining of the second input data, the one or more processors may be configured to determine the second input data by applying different weights to the first component and the second component.

The apparatus may include a user interface including: a first section configured to display a plurality of points of reference (PORs) corresponding to different input data and to receive a first user input of selecting a first POR corresponding to the first input data among the plurality of PORs; a second section configured to display the first input data corresponding to the first user input and to receive a second user input of modifying the first input data; a third section configured to display the first output data based on the first function; a fourth section configured to display a settable condition and to receive a third user input of setting the first target condition; and a fifth section configured to display recommended input data comprising the second input data based on the second function.

The apparatus may include a memory storing instructions that, when executed by the one or more processors, configure the one or more processors to perform the setting of the first input data and the first target condition, the predicting of the first output data, and the determining of the second input data.

In another general aspect, a processor-implemented method with data exploration includes: obtaining first input data and a first target value; determining, using a first function, first output data based on the first input data; and determining, using a second function, second input data such that a value of output data of the first function determined based on the second input data is closer to the target value than a value of the first output data.

The determining, using the second function, of the second input data may include determining a difference between a mean value of the first output data and the first target value and determining a standard deviation of the first output data.

The determining, using the second function, of the second input data may include determining output data of the second function based on the first output data and determining the second input data based on the output data of the second function.

A value of output data of the second function determined based on the second output data may be less than a value of the output data of the second function determined based on the first output data.

Other features and aspects will be apparent from the following detailed description, the drawings, and the claims.

BRIEF DESCRIPTION OF THE DRAWINGS

FIG. 1 illustrates an example of an operation of a data exploration apparatus.
FIG. 2 illustrates an example of data prediction of a surrogate function and data recommendation of an acquisition function.
FIG. 3 is a flowchart illustrating an example of a data exploration operation.
FIG. 4 illustrates an example of a user interface for data exploration.
FIG. 5 illustrates an example of recommended input data.
FIG. 6 is a flowchart illustrating an example of a data exploration method.
FIG. 7 illustrates an example of a configuration of a data exploration apparatus.
FIG. 8 illustrates an example of a configuration of an electronic apparatus.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known, after an understanding of the disclosure of this application, may be omitted for increased clarity and conciseness.

Although terms of "first" or "second" are used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween. Likewise, expressions, for example, "between" and "immediately between" and "adjacent to" and "immediately adjacent to" may also be construed as described in the foregoing.

The terminology used herein is for the purpose of describing particular examples only, and is not to be used to limit the disclosure. As used herein, the singular forms "a", "an", and "the" are intended to include the plural forms as well, unless the context clearly indicates otherwise. As used herein, the term "and/or" includes any one and any combination of any two or more of the associated listed items. It should be further understood that the terms "comprises," "includes," and "has" specify the presence of stated features, numbers integers, steps, operations, elements, components, and/or a combination thereof, but do not preclude the presence or addition of one or more other features, numbers, integers, steps, operations, elements, components, and/or combinations thereof. The use of the term "may" herein with respect to an example or embodiment (for example, as to what an example or embodiment may include or implement) means that at least one example or embodiment exists where such a feature is included or implemented, while all examples are not limited thereto.

Unless otherwise defined, all terms including technical or scientific terms used herein have the same meaning as commonly understood by one of ordinary skill in the art to which this disclosure pertains and based on an understanding of the disclosure of the present application. It will be further understood that terms, such as those defined in commonly-used dictionaries, should be interpreted as having a meaning that is consistent with their meaning in the context of the relevant art and the disclosure of the present application, and will not be interpreted in an idealized or overly formal sense unless expressly so defined herein.

Hereinafter, examples will be described in detail with reference to the accompanying drawings. Regarding the reference numerals assigned to the elements in the drawings, it should be noted that the same elements will be designated by the same reference numerals, and redundant descriptions thereof will be omitted.

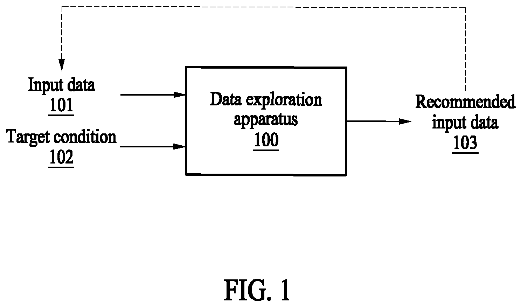

FIG. 1 illustrates an example of an operation of a data exploration apparatus. A data exploration apparatus 100 may explore (e.g., determine) data that optimizes a given problem (or operation). The given problem may correspond to an objective function. The optimization may be to find an input that maximizes the objective function (e.g., an input that maximizes an output of the objective function). The data exploration apparatus 100 may explore the input that maximizes the objective function, through function optimization. In many cases, the objective function may be unknown. In such cases, a typical data exploration apparatus may consume a lot of costs to test the objective function.

The data exploration apparatus 100 may access an optimal solution through a relatively less number of evaluations using Bayesian optimization. The Bayesian optimization may use a surrogate function that models the objective function based on a sample evaluation and an acquisition function that provides information for determining a next evaluation point.

The data exploration apparatus 100 may perform the sample evaluation such that an experimental area is filled overall. After that, the data exploration apparatus 100 may train on the surrogate function using a sample evaluation result. The surrogate function may provide a predicted value and an uncertainty value for the entire experimental area. The acquisition function may select a next evaluation point based on the two information. A point close to an existing evaluation point and having a low uncertainty may have a small degree of improvement. A point having a large degree of improvement may be far apart from the existing evaluation point and have a high uncertainty. The data exploration apparatus 100 may select the next evaluation point in consideration of a trade-off between exploration and exploitation. When a new evaluation result is obtained, the surrogate function may be updated based on the new evaluation result and the foregoing process may be repeated.

The data exploration apparatus 100 performs the Bayesian optimization using a target-based acquisition function. When optimizing the objective function, an existing acquisition function assumes that a maximum value or target of the objective function is unknown and suggests a next input by calculating (e.g., determining) how much a next value is to be improved in comparison to an existing maximum value. For example, the existing acquisition function may use the existing maximum value, such as calculating a probability of the next value being improved in comparison to the existing maximum value or calculating an average improvement degree of the next value compared to the existing maximum value. When a target is set, the target-based acquisition function suggests a next input in consideration of a degree to which the corresponding target is achieved.

The data exploration apparatus 100 gradually achieves the target through the target-based acquisition function. Optimization of a design and process development of a semiconductive product has characteristics as follows. First, a desired shape of a product to be fabricated is specified to some extent, and information on a maximum value of the objective function is derived. In addition, an evaluation area in which a meaningful result can be obtained from the objective function may be significantly limited. For example, even a slight deviation from the existing evaluation area may cause a failure in acquiring the meaningful result, so that data for learning the surrogate function may not be acquired. Accordingly, it may be difficult to acquire an input for acquiring a desired result in an optimization process. The optimization process is gradually performed. Also, as the optimization is repetitively performed, the shape of the desired result is gradually changed, thereby approaching a final shape. The existing acquisition function may not consider such target. Thus, when it is applied directly, it may be difficult to apply to an optimization situation in which a gradual target can be set, such as a case of semiconductor. Although the description is given of the case of semiconductor herein, the target-based acquisition function may also be used in other cases in which a gradual target is set, in addition to the case of semiconductor.

The data exploration apparatus 100 determines recommended input data 10 based on input data 101 and a target condition 102. The input data 101 may be the best data (e.g., data that derives an existing maximum value or data that achieves an existing target) to date. The target condition 102 may be a current target. The data exploration apparatus 100 predicts output data corresponding to the input data 101 using the surrogate function, compare the output data and the target condition 102 using the target-based acquisition function, and determines the recommended input data 103 based on a comparison result. The data exploration apparatus 100 performs an actual evaluation using the recommended input data 103 and updates the surrogate function based on an evaluation result. After that, the data exploration apparatus 100 performs optimization of a next step based on new input data 101 and a new target condition 102. The new input data 101 is the recommended input data 103 or a revised version of the recommended input data 103. Through such a repetitive process, the target isgradually achieved.

The data exploration apparatus 100 may provide a user interface for data exploration. The user interface may include at least one of a section that sets the input data 101, a section that displays output data according to the input data 101, a section that sets the target condition 102, and a section that displays the recommended input data 103 according to the target condition 102. The user interface may freely set the input data 101 and the target condition 102 in detail and provide an environment in which output data and an optimization result are intuitively identified. Through the user interface, a user may easily apply user's knowledge or intuition to a data exploration process. Accordingly, the data exploration may be performed with increased efficiency.

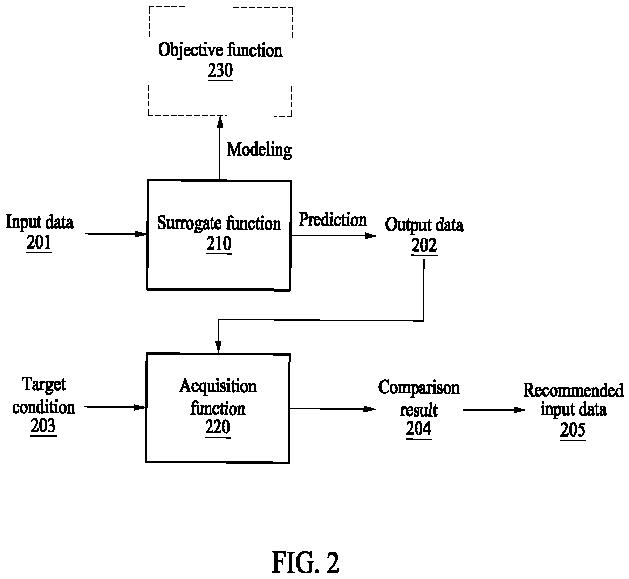

FIG. 2 illustrates an example of data prediction of a surrogate function and data recommendation of an acquisition function. A surrogate function 210 modesl an objective function 230 based on a sample evaluation result and predicts output data 202 corresponding to input data 201 using a model corresponding to a modeling result. The output data 202 includes a predicted value for a function value of a model and an uncertainty value of the corresponding predicted value.

An acquisition function 220 provides a comparison result 204 obtained from a comparison between the output data 202 and a target condition 203. The acquisition function 220 is defined as an expected squared error (ESE) as shown in Equation 1 below, for example.

$$\text{Equation 1:}$$

$$ESE = \int (y' - t)^2 p(y') dy'$$

In Equation 1, $y'$ denotes a predicted value of the surrogate function 210 for an input x (e.g., the output data 202), and t denotes a target (e.g., the target condition 203). In Equation 1, the surrogate function 210 and the input x are omitted for brevity. $y'$ follows a normal distribution, and $p(y') = Normal(\mu, \sigma)$ is defined. Normal denotes a normal distribution, $\mu$ denotes a mean value of $y'$, and $\sigma$ denotes a standard deviation value of $y'$. Equation 1 may be expressed as Equation 2 below, for example.

$$\text{Equation 2:}$$

$$\int (y' - t)^2 p(y') dy'$$

$$= \int (y'^2 - 2ty' + t^2) p(y') dy'$$

$$= \int y'^2 p(y') dy' - 2t \int y p(y') dy' + t^2 \int p(y') dy'$$

$$= \sigma^2 + \mu^2 - 2t\mu + t^2$$

$$= \sigma^2 + (t - \mu)^2$$

According to a last row of Equation 2 (e.g., $ESE = \sigma^2 + (t - \mu)^2$), an ESE iscalculated using a target t, an average $\mu$ of predicted values, and a standard deviation $\sigma$ of the predicted values. The average $\mu$ and the standard deviation $\sigma$ are determined using the surrogate function 210. Unlike the existing acquisition function, the ESE is defined as a form of an error. Thus, the smaller the value, the better (or less error). When applied to the existing Bayesian optimization, the ESE may be applied by reversing signs.

According to Equation 1, the ESE indicate a difference in average between the predicted value $y'$ and a target t according to the input x. The output data 202 corresponds to the predicted value $y'$, the target condition 203 corresponds to a target t, and the comparison result 204 correspond to a difference in average. The data exploration apparatus explores or determines recommended input data 205 based on the comparison result 204. The data exploration apparatus provides the recommended input data 205 for deriving an output closer to a target according to the target condition 203.

The data exploration apparatus may use the ESE value in various ways. In non-limiting examples, the target condition 203 includes a target value (e.g., the target t of Equation 1). In such cases, the closer the predicted value to the target value, the higher the degree of achievement of the target may be considered. The data exploration apparatus determines, to be the recommended input data 205, new input data that derives (e.g., using the surrogate function 210) a predicted value closer to the corresponding target value compared to the predicted value of the output data 202. The target value corresponds to the target t of Equation 1. The data exploration apparatus explores or determines the input x representing a smaller ESE value in Equation 1 and determine as the recommended input data 205.

According to a last row of Equation 2 (e.g., $ESE = \sigma^2 + (t - \mu)^2$), the acquisition function 220 provides a difference component representing a difference between an average $\mu$ of the output data 202 and the target t of the target condition 203, and a standard deviation component representing a standard deviation $\sigma$ of the output data 202. The data exploration apparatus may apply different weights to the difference component and the standard deviation component (e.g., $ESE = (w_1\sigma)^2 + (w_2(t - \mu))^2$), thereby appropriately adjusting the trade-off between exploration and exploitation. For example, in an example in which the exploration is to be considered more than the exploitation, the data exploration apparatus may give a higher priority to reduce the difference and assign a higher weight to the difference component (e.g., $w_2 > w_1$). Also, in an example in which the exploitation is to be considered more than the exploration, the data exploration apparatus may give a higher priority to reduce the uncertainty and assign a higher weight to the standard deviation component (e.g., $w_1 > w_2$).

The objective function 230 of FIG. 2 may include a plurality of objective functions, according to non-limiting examples. In such cases, the surrogate function 210 may include subordinate surrogate functions that model the plurality of objective functions (e.g., where each subordinate surrogate function models a respective one of the objective functions), and the output data 202 may include a predicted value and an uncertainty value of each of the subordinate surrogate functions. The target condition 203 may include a plurality of target values corresponding to the plurality of objective functions (e.g., where each target value corresponds to a respective one of the objective functions). The data exploration apparatus may compare the predicted value and a target value by applying Equation 1 to each objective function. Also, the data exploration apparatus may add up ESE values and determine a combination of input values representing a relatively small sum to be the recommended input data 205.

In an example, the target condition 203 may include a target range. In this example, when the predicted value belongs to (e.g., is within) the target range, it may be considered or determined that the target is achieved. When the predicted value does not belong to the target range, as the predicted value is closer to boundary values of the target range, it may be considered or determined that a degree of target achievement is higher. When the predicted value of the output data 202 does not belong to the corresponding target range, the data exploration apparatus may determine new input data that derives a predicted value belonging to the corresponding target range, to be the recommended input data 205. Even if not, the data exploration apparatus may provide the recommended input data 205 closer to the boundary values of the target range. Equation 1 may be modified such that the target t represents a range.

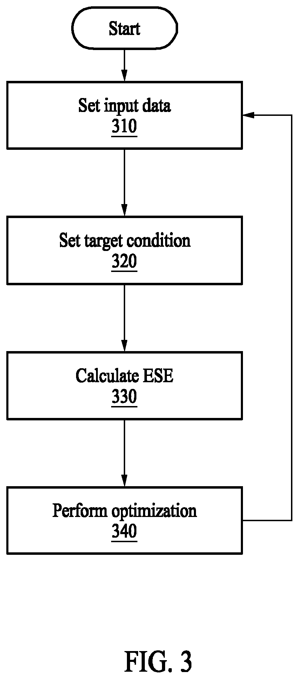

FIG. 3 is a flowchart illustrating an example of a data exploration operation. Referring to FIG. 3, in operation 310, a data exploration apparatus sets input data. For example, the input data may be determined based on best data to date. The input data includes at least one input value. The surrogate function outputs a predicted value for a function value of an objective function and uncertainty of the corresponding predicted value based on the input data.

In operation 320, the data exploration apparatus sets a target condition. The target condition may include a target value or a target range of the predicted value. In operation 330, the data exploration apparatus calculates an ESE. The data exploration apparatus calculates the ESE based on output data (e.g., an average and/or a standard deviation of the predicted value) of a surrogate function and the target condition.

In operation 340, the data exploration apparatus performs optimization. When the target condition includes the target value, the data exploration apparatus may explore or determine input data that reduces a difference between the target value and a mean value of the predicted value. When the target condition includes the target range, the data exploration apparatus may explore or determine, as recommended input data, input data such that when the input data is input to the surrogate function, the mean value of the predicted value output by the surrogate function belongs to the target range (e.g., is within the target range) or is close to boundary values of the target range (e.g., a difference between the mean value and either of the boundary values is less than or equal to a predetermined value). The data exploration apparatus may provide the recommended input data. When an actual evaluation is performed based on the recommended input data, the data exploration apparatus may update the surrogate function based on a result of the corresponding evaluation.

After that, operations 310 through 340 are performed again based on the updated surrogate function. In operation 310, new input data is set. The new input data isset based on the recommended input data of a previous iteration. For example, when the recommended input data of the previous iteration corresponds to the best data to date, the corresponding recommended input data may be the new input data. In operation 320, a new target condition is set. A new condition matching a prediction result according to the new input data is set. In operation 330, an ESE is calculated based on the new input data and the new condition. As such, gradual or iterative target setting and achievement is repeated, so that an optimal result is obtained.

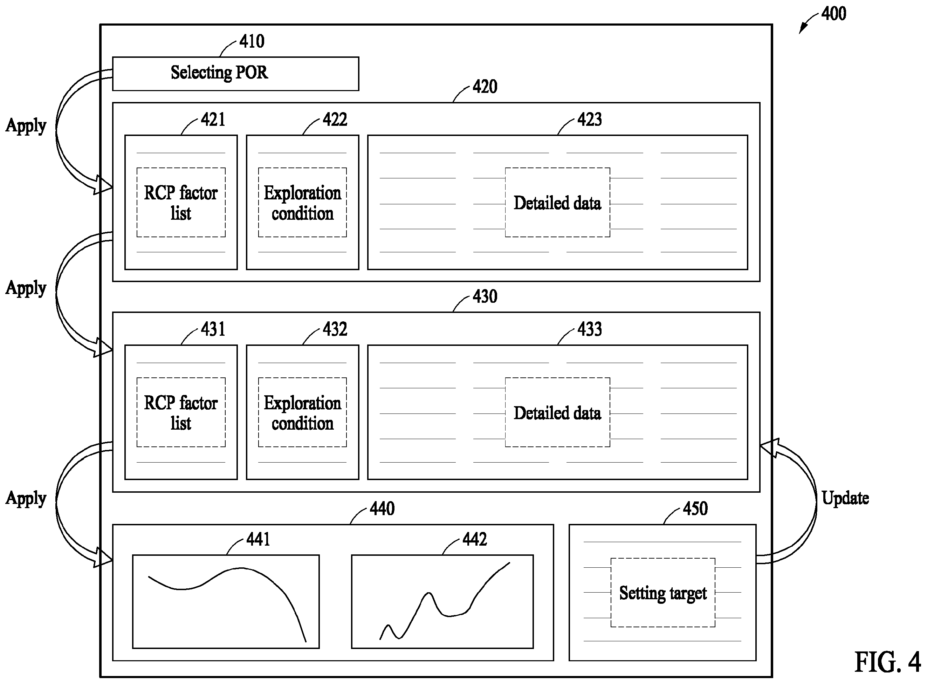

FIG. 4 illustrates an example of a user interface for data exploration. Referring to FIG. 4, a user interface 400 of the data exploration apparatus may include a section 410 that provides a point of reference (POR) selecting function, a section 420 that shows information on a selected POR, a section 430 that provides an information modification function, a section 440 that displays output data, and a section 450 that provides an optimization condition setting function. The section 410 may be referred to as a POR selector. The section 430 may be referred to as a recipe editor. The section 440 may be referred to as an evaluation result viewer. The section 450 may be referred to as a condition setter.

The section 410 may display a plurality of PORs corresponding to different input data and receive a user input of selecting any one or more of the plurality of PORs. For example, a POR may be set based on input data applied to an actual evaluation, and a best POR to date may be selected. The section 410 may show the entire POR list or may show input data including a predetermined keyword through a keyword search. When a POR is selected by a user, detailed information of the corresponding POR may be displayed in the section 420.

The section 420 may include a recipe (RCP) factor list 421, an exploration condition 422, and detailed data 423. The input data may include a plurality of input values. The input data may also be referred to as an RCP. The input value may also be referred to as an RCP factor. The RCP factor may be a single value or a list of values changing based on a time or stage. Anything that may affect an evaluation result may correspond to the RCP factor. The RCP factor list 421 may provide a list of RCP factors included in the input data. The detailed data 423 may provide values of the RCP factors.

The exploration condition 422 may include a detailed condition to be considered for each RCP factor when exploring data. For example, the exploration condition 422 may include an RCP factor to be changed when exploring data, a range of change (e.g., minimum and maximum boundary values), and a change precision (in other words, a unit of change). The exploration condition 422 may indicate content applied to an RCP of a POR, which may be modified through a field of an exploration condition 432 of the section 430. In a field of the exploration condition 422, a checkbox for selecting an RCP factor to be changed may be provided around each RCP factor. The data exploration apparatus may perform data exploration while changing a selected RCP factor in the range of change according to the change precision. In a case of an RCP factor having a list of values, whether to change a value of a predetermined time or stage may be determined through the checkbox. When the RCP factor has the list of the values, predetermined time or stages may be set to change based on the same difference or percentage.

The section 430 may include an RCP factor list 431, the exploration condition 432, and detailed data 433. When a POR is selected through the section 410, an RCP of the selected POR may be loaded in the section 420, so that content of the section 420 is identically displayed in the section 430. A user may modify the RCP through the section 430. For example, the user may change the exploration condition 432 or change the detailed data 433. For example, the user may select an RCP factor to be changed, set a range of change and/or a change precision of the corresponding RCP factor, and/or set a value of the corresponding RCP factor. When the value is changed, the section 440 may be updated based on the changed RCP. Through this, the user may immediately confirm an effect of changing a value of a specific factor. In the case in which the value is changed, a difference before and after the change may be displayed in the section 420 and/or the section 430. Since an exploration condition for an evaluation area may be set using the user interface 400, a case in which a meaningful evaluation result cannot be obtained may be suppressed.

The section 440 may include graphs 441 and 442 representing an actual evaluation result according to a POR RCP of the section 420 and/or output data (the predicted value and the uncertainty value) of the surrogate function according to the section 430. When the input data is modified through the section 430, the modified input data may be applied to the section 440. The surrogate function may predict a single value or predict numerous values. In addition, when various characteristics of a result are predicted through various objective functions, the surrogate function may include a plurality of subordinate surrogate functions. The section 440 may show a distribution for each subordinate surrogate function. When predicting numerous values for each subordinate surrogate function, the section 440 may show the values separately for each the surrogate function. For example, the graphs 441 and 442 may correspond to predicted values of different subordinate surrogate functions. When a predicted value follows a Gaussian distribution, a range of uncertainty appearing when a standard deviation is added to or subtracted from the predicted value may be expressed around the predicted value. An uncertainty range (such as one times the standard deviation, two times the standard deviation, and three times the standard deviation, as non-limiting examples) may be expressed as necessary. When a target condition is set through the section 450, the corresponding target condition may be displayed in the section 440.

The section 450 may provide an optimization condition setting function. The target condition may be set through the section 450. The target condition may be set for each subordinate surrogate function and/or for each predicted value. The user may obtain a result of a desired direction by setting the target condition. The target condition may be set through a relative difference to an actual evaluation result of an existing POR RCP or set to be an absolute value. The target condition may be set to be a predetermined value (e.g., the target value) or set to be a predetermined range (e.g., the target range). When the target condition is set to be a value, as the predicted value is closer to the value, an objective function value may increase. When the target condition is set to be a range, if the predicted value is out of the corresponding range, an objective function value may increase as the predicted value is closer to boundary values of both ends. Also, in this case, if the predicted value is within the range, the objective function value may be maximized. The target condition may be displayed in the section 440, and when the target condition is changed, the display of the section 440 may be updated. Through the section 450, an additional condition such as a type of acquisition function, a weight of each surrogate function when calculating the acquisition function, a degree to which the uncertainty is considered when exploring data, and a number of RCPs to be explored or determined may be set.

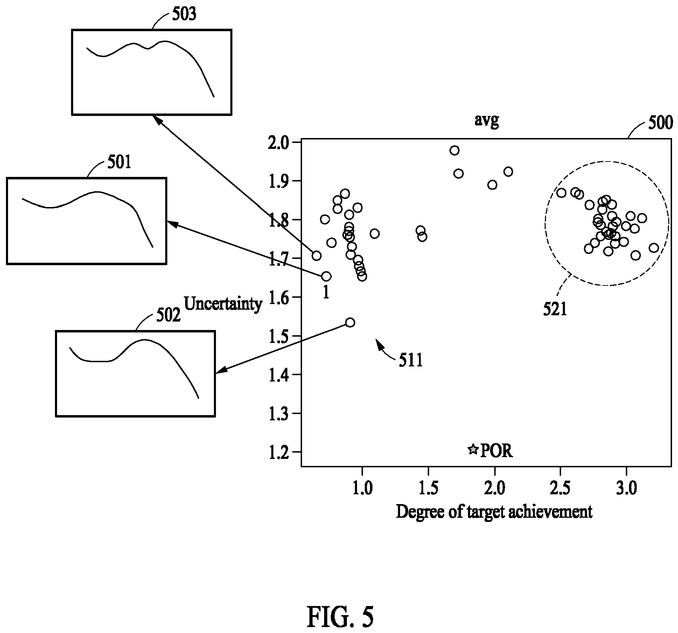

FIG. 5 illustrates an example of recommended input data. When an RCP and an optimization condition are set, optimized data exploration may be performed based on the set RCP and optimization condition, and the recommended input data may be derived. The recommended input data may be provided through a graph 500. The graph 500 may correspond to one section of a user interface. The corresponding section may be referred to as an optimization result viewer. In the graph 500, a star mark represents a POR RCP and circle marks represent recommended input data. The recommended input data may correspond to an RCP. In the graph 500, a horizontal axis represents a degree of target achievement and a vertical axis represents uncertainty. The recommended input data may be distributed in a direction of an arrow 511 according to a trade-off between the degree of target achievement and the uncertainty.

Ranking information may be displayed in at least a portion of the recommended input data. The highest ranking may be displayed as "1", and other rankings may be displayed as "2", "3", "4", and the like. The ranking information may be determined based on the degree of target achievement and the uncertainty, comprehensively. If necessary, a higher weight may be applied to one of the degree of achievement and the uncertainty. A number of items of recommended input data shown through the optimization result viewer may be restricted. For example, recommended data that exhibits a poor result compared to other recommended input data in terms of the degree of target achievement and the uncertainty may be removed through a predetermined operation (e.g., a Skyline operator).

When recommended input data is selected by a user, an RCP editor and an evaluation result viewer may be updated based on the corresponding recommended input data. An RCP of the RCP editor may be changed to be a value according to the corresponding recommended input data, and a graph of the evaluation result viewer may be changed in a form according to the corresponding recommended input data. For example, when recommended input data of the highest ranking is selected, a graph 501 may be displayed in the evaluation result viewer. Also, when recommended input data of subsequent rankings are selected in sequence, graphs 502 and 503 may be sequentially displayed in the evaluation result viewer. The user may previously confirm a result according to the recommended input data by referencing the ranking information and the evaluation result viewer, modify the recommended input data through the RCP editor as necessary, and perform an actual evaluation based on final recommended input data.

Recommended input data far from a circle 521 may correspond to an input of a subordinate surrogate function of one aspect (e.g., average). Recommended input data around the circle 521 may correspond to an input of the subordinate surrogate function of another aspect. The recommended input data far from the circle 521 may be distinguished from the recommended input data around the circle 521 by different effects (e.g., color). The user may select recommended input data by considering the subordinate surrogate function of various aspects. Since the user interface provides an environment in which the user may intervene in an optimization process and analyze an optimization result, limitations in technical fields such as semiconductor design or semiconductor process development, where a shortage of data due to evaluation costs occur, may be overcome.

For example, a user may optimize a mold etch recipe of a semiconductor process (e.g., a contact forming process of a vertical negative-AND (VNAND) product) using the user interface.

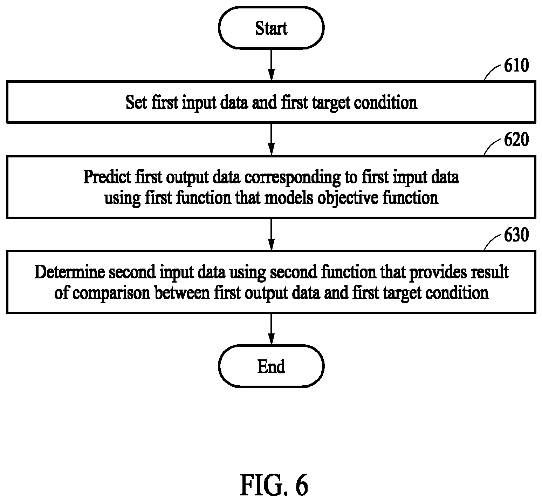

FIG. 6 is a flowchart illustrating an example of a data exploration method. Referring to FIG. 6, a data exploration apparatus sets first input data and a first target condition in operation 610. In operation 620, the data exploration apparatus predicts first output data corresponding to the first input data using a first function (e.g., a surrogate function) that models an objective function. In operation 630, the data exploration apparatus determines second input data using a second function (e.g., an acquisition function) that provides a result of comparison between the first output data and the first target condition.

The first target condition may include a first target value, and operation 630 may include an operation of determining input data that derives output data closer to a target value compared to the first output data, to be the second input data. The first target condition may include a first target range, and when the first output data does not belong to the first target range, operation 630 may include an operation of determining input data that derives output data belonging to the first target range, to be the second input data. The first target condition may include the first target value, and the second function may provide a first component representing a difference between a mean value of the first output data and the first target value and a second component representing a standard deviation value of the first output data. Operation 630 may include an operation of determining the second input data by applying different weights to the first component and the second component.

Input data is repetitively explored or determined through gradual target conditions including the first target condition. The data exploration apparatus sets a second target condition, predicts second output data corresponding to the second input data using the first function, and determine sthird input data using the second function.

The data exploration apparatus may display a plurality of PORs corresponding to different input data. Also, the data exploration apparatus may provide a user interface including a first section that receives a first user input of selecting a first POR corresponding to the first input data among the plurality of PORs, a second section that displays the first input data in response to the first user input and receives a second user input for modifying the first input data, a third section that displays the first output data based on the first function, a fourth section that displays a settable condition and receives a third user input of setting the first target condition, and a fifth section that displays recommended input data including the second input data based on the second function.

The third section may include a first graph representing the first output data according to the first input data. When the first input data is modified in response to the second user input, the first output data may be changed based on the first function, so that the first graph is updated based on the modified first input data and the changed first output data. The fifth section may include a second graph representing a degree of target achievement and uncertainty of each recommended input data. When the recommended input data corresponding to the second input data is selected in the second graph, the second section and the third section may be updated based on the second input data.

In addition, the descriptions of FIGS. 1 through 5, 7, and 8 may apply to the data exploration method.

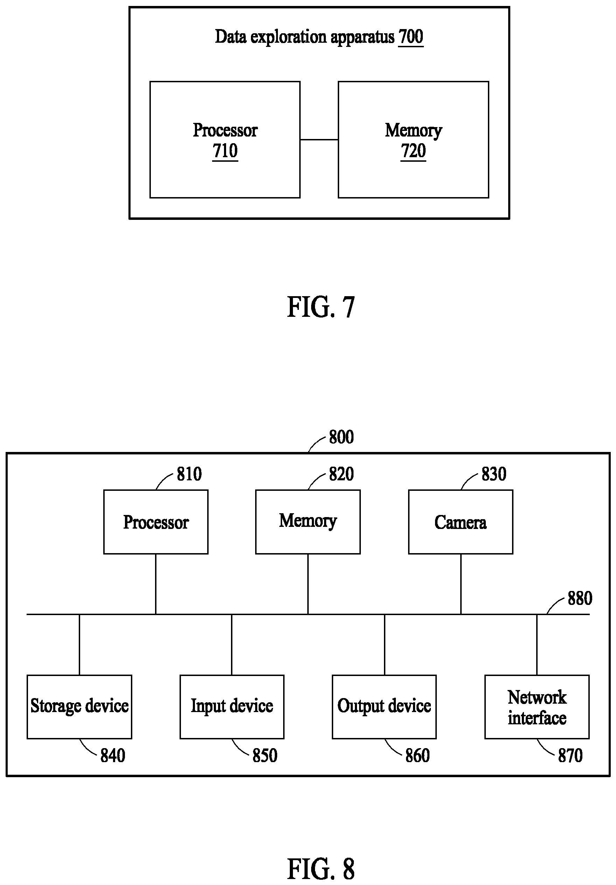

FIG. 7 is a block diagram illustrating an example of a configuration of a data exploration apparatus. Referring to FIG. 7, a data exploration apparatus 700 (e.g., any or all of the data exploration apparatuses described herein with reference to FIGS. 1 through 6 and 8) may include a processor 710 (e.g., one or more processors) and a memory 720 (e.g., one or more memories). The memory 720 may be connected to the processor 710 and store instructions to be executed by the processor 710, data to be computed by the processor 710, or data that has been processed by the processor 710. The memory 720 may include a non-transitory computer-readable medium, for example, a high-speed random-access memory and/or a non-volatile computer-readable storage media (e.g., one or more disk storage devices, flash memory devices, or other non-volatile solid state memory devices. The data exploration apparatus 700 may be any data exploration apparatus described herein with reference to FIGS. 1 through 6 and 8, such as the data exploration apparatus 100 of FIG. 1.

The processor 710 may execute instructions to perform operations of FIGS. 1 through 6 and 8. For example, the processor 710 may set first input data and a first target condition, predict first output data corresponding to the first input data using a first function (e.g., a surrogate function) that models an objective function, and determine second input data using a second function (e.g., an acquisition function) that provides a result of comparison between the first output data and the first target condition. In addition, the description of FIGS. 1 through 6 and 8 may apply to the data exploration apparatus 700. The processor 710 may perform any one or more or all of the operations and methods described herein with reference to FIGS. 1 through 6 and 8.

FIG. 8 is a block diagram illustrating an example of a configuration of an electronic apparatus. Referring to FIG. 8, an electronic apparatus 800 may include a processor 810 (e.g., one or more processors), a memory 820 (e.g., one or more memories), a camera 830, a storage device 840, an input device 850, an output device 860, and a network interface 870. The processor 810, the memory 820, the camera 830, the storage device 840, the input device 850, the output device 860, and the network interface 870 may communicate through a communication bus 880. For example, the electronic apparatus 800 may be implemented as a portion of a mobile device such as a smartphone, a tablet computer, and a laptop computer and a computing device such as a desktop computer and a server. The electronic apparatus 800 may be or include the data exploration apparatus 100 of FIG. 1 and/or the data exploration apparatus 700 of FIG. 7.

The processor 810 executes functions and instructions for execution in the electronic apparatus 800. For example, the processor 810 may process instructions stored in the memory 820 or the storage device 840. The processor 810 may perform any one or more or all operations and methods described herein with reference to FIGS. 1 through 7. The memory 820 may include a computer-readable storage medium or a computer-readable storage device. The memory 820 may store instructions to be executed by the processor 810 and store relevant information while software and/or an application is executed by the electronic apparatus 800.

The camera 830 may capture an image and/or a video. The storage device 840 includes a computer-readable storage medium or a computer-readable storage device. The storage device 840 may store a larger quantity of information compared to the memory 820 and store information for a long time. The storage device 840 may include, for example, a magnetic hard disk, an optical disk, a flash memory, a floppy disk, or other types of non-volatile memories known in the art.

The input device 850 may receive an input from a user based on a traditional input method using a keyboard and a mouse and a new input method such as a touch input, a voice input, and an image input. For example, the input device 850 may include any device that detects an input from a keyboard, a mouse, a touch screen, a microphone, or a user and transfers the detected input to the electronic apparatus 800. The output device 860 may provide an output of the electronic apparatus 800 to a user through a visual, auditory, or tactile channel. The output device 860 may include, for example, a display, a touch screen, a speaker, a vibration generating device, or any device for providing an output to a user (e.g., the user interface 400 of FIG. 4). For example, the network interface 870 may communicate with an external device through a wired or wired network.

The data exploration apparatuses, user interfaces, data exploration apparatuses, processors, memories, electronic apparatuses, cameras, storage devices, input devices, output devices, network interfaces, communication buses, data exploration apparatus 100, user interface 400, data exploration apparatus 700, processor 710, memory 720, electronic apparatus 800, processor 810, memory 820, camera 830, storage device 840, input device 850, output device 860, network interface 870, communication bus 880, and other apparatuses, units, modules, devices, and components described herein with respect to FIGS. 1-8 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-8 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

The invention is defined by the subject matter of the appended claims.

**Claims**

1.  A processor-implemented method with data exploration for optimizing of a design and process development of a semiconductive product, comprising:

    specifying a desired shape of the product to be fabricated and deriving information on a maximum value of an objective function (230);
    setting first input data (101, 201) and a first target condition (102, 203);
    predicting first output data (202) corresponding to the first input data (101, 201) using a first function (210) that models the objective function (230); and
    determining second input data using a second target-based function (220) that provides a result of comparison between the first output data (202) and the first target condition (203), wherein the second function (220) comprises a first component corresponding to a difference between a mean value of the first output data (202) and the first target condition (102, 203) and a second component corresponding to a standard deviation value of the first output data (202) such that the second target-based function (220) is defined as an expected squared error, ESE; and
    iteratively performing the previous steps (220).

2.  The method of claim 1, wherein

    the first target condition (102, 203) comprises a first target value, and
    the determining of the second input data comprises determining, to be the second input data, input data that derives, using the first function (210), output data closer to the target value (102, 203) compared to the first output data (202).

3.  The method of claim 1, wherein

    the first target condition (102, 203) comprises a first target range, and
    the determining of the second input data comprises determining, to be the second input data, input data that derives, using the first function (210), output data within the first target range in response to the first output data (202) not being within the first target range.

4.  The method of one of claims 1 to 3, wherein the determining of the second input data comprises determining the second input data by applying different weights to the first component and the second component.

5.  The method of one of claims 1 to 4, wherein input data (101) is repetitively determined through gradual target conditions (102) comprising the first target condition (102, 203).

6.  The method of one of claims 1 to 5, comprising:

    setting a second target condition;
    predicting second output data corresponding to the second input data using the first function (210); and
    determining third input data using the second function (220).

7.  The method of one of claims 1 to 6, further comprising:

providing a user interface (400),
wherein the user interface (400) comprises:

a first section (410) configured to display a plurality of points of reference, PORs, corresponding to different input data (101, 201) and to receive a first user input of selecting a first POR corresponding to the first input data among the plurality of PORs;
a second section (420) configured to display the first input data (101, 201) corresponding to the first user input and to receive a second user input of modifying the first input data (101, 201);
a third section (430) configured to display the first output data (202) based on the first function (210);
a fourth section (440) configured to display a settable condition and to receive a third user input of setting the first target condition (203); and
a fifth section (450) configured to display recommended input data comprising the second input data based on the second function (220).

8. The method of claim 7, wherein the third section (430) comprises a first graph representing the first output data (202) according to the first input data (101, 201), and in response to the first input data (101, 201) being modified according to the second user input, the first output data (202) is changed based on the first function (210), and the first graph is updated based on the modified first input data and the changed first output data, or wherein the fifth section (450) comprises a second graph representing a degree of target achievement and uncertainty of each recommended input data, and in response to recommended input data corresponding to the second input data being selected from the second graph, the second section (420) and the third section (430) are updated based on the second input data.

9. An apparatus (100, 700) with data exploration for optimizing of a design and process development of a semiconductive product, comprising:
one or more processors (710) configured to:

specify a desired shape of the product to be fabricated and derive information on a maximum value of an objective function (230);
set first input data (101, 201) and a first target condition (102, 203) based on a first user input applied through a user interface (400);
predict first output data (202) corresponding to the first input data (101, 201) using a first function (210) that models the objective function;
display the first output data (202) through the user interface (400);
determine recommended input data using a second target-based function (220) that provides a result of comparison between the first output data (202) and the first target condition (102, 203), wherein the second function (220) comprises a first component corresponding to a difference between a mean value of the first output data (202) and the first target condition (203) and a second component corresponding to a standard deviation value of the first output data (202) such that the second target-based function (220) is defined as an expected squared error, ESE;
display the recommended input data through the user interface (400);
determine second input data based on a second user input applied through the user interface (400); and
iteratively perform the previous actions (220).

10. The apparatus (100, 700) of claim 9, wherein

the first target condition (102, 203) comprises a first target value, and
for the determining of the second input data, the one or more processors (710) are configured to determine, to be the second input data, input data that derives, using the first function (210), output data closer to the target value compared to the first output data (102, 203).

11. The apparatus (100, 700) of claim 9, wherein

the first target condition (102, 203) comprises a first target range, and
for the determining of the second input data, the one or more processors (710) are configured to determine, to be the second input data, input data that derives, using the first function (210), output data within the first target range in response to the first output data (202) not being within the first target range.

12. The apparatus (100, 700) of one of claims 9 to 11, wherein

for the determining of the second input data, the one or more processors (710) are configured to determine the second input data by applying different weights to the first component and the second component.

13. A non-transitory computer-readable storage medium storing instructions that, when executed by one or more processors (710), configure the one or more processors (710) to perform a processor-implemented method with data exploration for optimizing of a design and process development of a semiconductive product according to any of claims 1 to 8.

**Patentansprüche**

1. Prozessorimplementiertes Verfahren mit Datenerhebung zum Optimieren eines Designs und einer Prozessentwicklung eines Halbleiterprodukts, umfassend:

   Festlegen einer gewünschten Form des herzustellenden Produkts und Ableiten von Informationen über einen Maximalwert einer Zielfunktion (230);
   Festlegen erster Eingabedaten (101, 201) und einer ersten Zielbedingung (102, 203);
   Vorhersagen erster Ausgabedaten (202) entsprechend den ersten Eingabedaten (101, 201) unter Verwendung einer ersten Funktion (210), welche die Zielfunktion (230) modelliert; und
   Bestimmen zweiter Eingabedaten unter Verwendung einer zweiten zielbasierten Funktion (220), die ein Ergebnis des Vergleichs zwischen den ersten Ausgabedaten (202) und der ersten Zielbedingung (203) bereitstellt, wobei die zweite Funktion (220) eine erste Komponente entsprechend einer Differenz zwischen einem Mittelwert der ersten Ausgabedaten (202) und der ersten Zielbedingung (102, 203) und eine zweite Komponente entsprechend einem Standardabweichungswert der ersten Ausgabedaten (202) umfasst, so dass die zweite zielbasierte Funktion (220) als ein Expected Squared Error (ESE) definiert ist; und
   wiederholendes Durchführen der vorhergehenden Schritte (220).

2. Verfahren nach Anspruch 1, wobei

   die erste Zielbedingung (102, 203) einen ersten Zielwert umfasst, und
   das Bestimmen der zweiten Eingabedaten das Bestimmen von Eingabedaten als zweite Eingabedaten umfasst, die unter Verwendung der ersten Funktion (210) Ausgabedaten ableiten, die im Vergleich zu den ersten Ausgabedaten (202) näher am Zielwert (102, 203) liegen.

3. Verfahren nach Anspruch 1, wobei

   die erste Zielbedingung (102, 203) einen ersten Zielbereich umfasst, und
   das Bestimmen der zweiten Eingabedaten das Bestimmen von Eingabedaten als zweite Eingabedaten umfasst, die unter Verwendung der ersten Funktion (210) Ausgabedaten innerhalb des ersten Zielbereichs als Reaktion auf die ersten Ausgabedaten (202) ableiten, die nicht innerhalb des ersten Zielbereichs liegen.

4. Verfahren nach einem der Ansprüche 1 bis 3, wobei das Bestimmen der zweiten Eingabedaten das Bestimmen der zweiten Eingabedaten durch Anwenden unterschiedlicher Gewichte auf die erste Komponente und die zweite Komponente umfasst.

5. Verfahren nach einem der Ansprüche 1 bis 4, wobei Eingabedaten (101) wiederholt durch graduelle Zielbedingungen (102), welche die erste Zielbedingung (102, 203) umfassen, bestimmt werden.

6. Verfahren nach einem der Ansprüche 1 bis 5, umfassend:

   Festlegen einer zweiten Zielbedingung;
   Vorhersagen von zweiten Ausgabedaten entsprechend den zweiten Eingabedaten unter Verwendung der ersten Funktion (210); und
   Bestimmen von dritten Eingabedaten unter Verwendung der zweiten Funktion (220).

7. Verfahren nach einem der Ansprüche 1 bis 6, ferner umfassend: Bereitstellen einer Benutzerschnittstelle (400), wobei die Benutzerschnittstelle (400) umfasst:

einen ersten Abschnitt (410), ausgebildet zum Anzeigen einer Vielzahl von Points of Reference (PORs) entsprechend verschiedenen Eingabedaten (101, 201) und zum Empfangen einer ersten Benutzereingabe zum Auswählen eines ersten POR entsprechend den ersten Eingabedaten aus der Vielzahl von PORs;

einen zweiten Abschnitt (420), ausgebildet zum Anzeigen der ersten Eingabedaten (101, 201) entsprechend der ersten Benutzereingabe und zum Empfangen einer zweiten Benutzereingabe zum Modifizieren der ersten Eingabedaten (101, 201);

einen dritten Abschnitt (430), ausgebildet zum Anzeigen der ersten Ausgabedaten (202) basierend auf der ersten Funktion (210);

einen vierten Abschnitt (440), ausgebildet zum Anzeigen einer festlegbaren Bedingung und zum Empfangen einer dritten Benutzereingabe zum Festlegen der ersten Zielbedingung (203); und

einen fünften Abschnitt (450), ausgebildet zum Anzeigen von empfohlenen Eingabedaten, umfassend die zweiten Eingabedaten, basierend auf der zweiten Funktion (220).

8. Verfahren nach Anspruch 7, wobei der dritte Abschnitt (430) einen ersten Graphen umfasst, der die ersten Ausgabedaten (202) gemäß den ersten Eingabedaten (101, 201) darstellt, und als Reaktion darauf, dass die ersten Eingabedaten (101, 201) gemäß der zweiten Benutzereingabe modifiziert werden, die ersten Ausgabedaten (202) basierend auf der ersten Funktion (210) geändert werden und der erste Graph basierend auf den modifizierten ersten Eingabedaten und den geänderten ersten Ausgabedaten aktualisiert wird, oder

wobei der fünfte Abschnitt (450) einen zweiten Graphen umfasst, der einen Grad der Zielerreichung und Unsicherheit der einzelnen empfohlenen Eingabedaten darstellt, und als Reaktion auf empfohlene Eingabedaten entsprechend den zweiten Eingabedaten, die aus dem zweiten Graphen ausgewählt werden, der zweite Abschnitt (420) und der dritte Abschnitt (430) basierend auf den zweiten Eingabedaten aktualisiert werden.

9. Vorrichtung (100, 700) mit Datenerhebung zum Optimieren eines Designs und einer Prozessentwicklung eines Halbleiterprodukts, umfassend:

einen oder mehrere Prozessoren (710), ausgebildet zum:

Festlegen einer gewünschten Form des herzustellenden Produkts und Ableiten von Informationen über einen Maximalwert einer Zielfunktion (230);

Festlegen von ersten Eingabedaten (101, 201) und einer ersten Zielbedingung (102, 203) basierend auf einer ersten Benutzereingabe, die durch eine Benutzerschnittstelle (400) angewendet wird;

Vorhersagen erster Ausgabedaten (202) entsprechend den ersten Eingabedaten (101, 201) unter Verwendung einer ersten Funktion (210), welche die Zielfunktion modelliert;

Anzeigen der ersten Ausgabedaten (202) durch die Benutzerschnittstelle (400);

Bestimmen von empfohlenen Eingabedaten unter Verwendung einer zweiten zielbasierten Funktion (220), die ein Ergebnis des Vergleichs zwischen den ersten Ausgabedaten (202) und der ersten Zielbedingung (102, 203) bereitstellt, wobei die zweite Funktion (220) eine erste Komponente entsprechend einer Differenz zwischen einem Mittelwert der ersten Ausgabedaten (202) und der ersten Zielbedingung (203) und eine zweite Komponente entsprechend einem Standardabweichungswert der ersten Ausgabedaten (202) umfasst, so dass die zweite zielbasierte Funktion (220) als ein Expected Squared Error (ESE) definiert ist;

Anzeigen der empfohlenen Eingabedaten durch die Benutzerschnittstelle (400);

Bestimmen zweiter Eingabedaten basierend auf einer zweiten Benutzereingabe, die durch die Benutzerschnittstelle (400) angewendet wird; und

wiederholendes Durchführen der vorhergehenden Aktionen (220).

10. Vorrichtung (100, 700) nach Anspruch 9, wobei

die erste Zielbedingung (102, 203) einen ersten Zielwert umfasst, und

für das Bestimmen der zweiten Eingabedaten der eine oder die mehreren Prozessoren (710) zum Bestimmen von Eingabedaten als zweite Eingabedaten ausgebildet sind, die unter Verwendung der ersten Funktion (210) Ausgabedaten ableiten, die im Vergleich zu den ersten Ausgabedaten (102, 203) näher am Zielwert liegen.

11. Vorrichtung (100, 700) nach Anspruch 9, wobei

die erste Zielbedingung (102, 203) einen ersten Zielbereich umfasst, und

für das Bestimmen der zweiten Eingabedaten der eine oder die mehreren Prozessoren (710) zum Bestimmen von Eingabedaten als zweite Eingabedaten ausgebildet sind, die unter Verwendung der ersten Funktion (210) Ausgabedaten innerhalb des ersten Zielbereichs als Reaktion auf die ersten Ausgabedaten (202) ableiten, die nicht innerhalb des ersten Zielbereichs liegen.

12. Vorrichtung (100, 700) nach einem der Ansprüche 9 bis 11, wobei
für das Bestimmen der zweiten Eingabedaten der eine oder die mehreren Prozessoren (710) zum Bestimmen der zweiten Eingabedaten durch Anwenden unterschiedlicher Gewichte auf die erste Komponente und die zweite Komponente ausgebildet sind.

13. Nichtflüchtiges computerlesbares Speichermedium zum Speichern von Anweisungen, die, wenn von einem oder mehreren Prozessoren (710) ausgeführt, den einen oder die mehreren Prozessoren (710) zum Durchführen eines prozessorimplementierten Verfahrens mit Datenerhebung zum Optimieren eines Designs und einer Prozessentwicklung eines Halbleiterprodukts nach einem der Ansprüche 1 bis 8 ausbilden.

**Revendications**

1. Procédé mis en œuvre par un processeur avec exploration de données pour optimiser la conception et le développement du processus d'un produit semi-conducteur, comprenant:

   la spécification d'une forme souhaitée du produit à fabriquer et la dérivation d'informations sur une valeur maximale d'une fonction objective (230);
   la définition de premières données d'entrée (101, 201) et d'une première condition cible (102, 203);
   la prédiction de premières données de sortie (202) correspondant aux premières données d'entrée (101, 201) à l'aide d'une première fonction (210) qui modélise la fonction objectif (230); et
   la détermination de deuxièmes données d'entrée à l'aide d'une deuxième fonction fondée sur une cible (220) qui fournit un résultat de comparaison entre les premières données de sortie (202) et la première condition cible (203), dans lequel la deuxième fonction (220) comprend un premier composant correspondant à une différence entre une valeur moyenne des premières données de sortie (202) et la première condition cible (102, 203) et une deuxième composante correspondant à une valeur d'écart type des premières données de sortie (202) de telle sorte que la deuxième fonction fondée sur une cible (220) soit définie comme une erreur quadratique attendue, ESE; et
   la répétition des étapes précédentes (220).

2. Procédé selon la revendication 1, dans lequel
la première condition cible (102, 203) comprend une première valeur cible, et la détermination des deuxièmes données d'entrée comprend la détermination, en tant que deuxièmes données d'entrée, de données d'entrée qui dérivent, à l'aide de la première fonction (210), des données de sortie plus proches de la valeur cible (102, 203) par rapport aux premières données de sortie (202).

3. Procédé selon la revendication 1, dans lequel

   la première condition cible (102, 203) comprend une première plage cible, et
   la détermination de la deuxième donnée d'entrée comprend la détermination, en tant que deuxième donnée d'entrée, d'une donnée d'entrée qui permet de dériver, à l'aide de la première fonction (210), une donnée de sortie dans la première plage cible en réponse au fait que la première donnée de sortie (202) ne se trouve pas dans la première plage cible.

4. Procédé selon l'une des revendications 1 à 3, dans lequel la détermination des deuxièmes données d'entrée comprend la détermination des deuxièmes données d'entrée en appliquant des pondérations différentes à la première composante et à la deuxième composante.

5. Procédé selon l'une des revendications 1 à 4, dans lequel les données d'entrée (101) sont déterminées de manière répétitive à travers des conditions cibles graduelles (102) comprenant la première condition cible (102, 203).

6. Procédé selon l'une des revendications 1 à 5, comprenant:

   la définition d'une deuxième condition cible;
   la prédiction de deuxièmes données de sortie correspondant aux deuxièmes données d'entrée à l'aide de la première fonction (210); et

la détermination de troisièmes données d'entrée à l'aide de la deuxième fonction (220).

7. Procédé selon l'une des revendications 1 à 6, comprenant en outre:

la fourniture d'une interface utilisateur (400),
dans lequel l'interface utilisateur (400) comprend:

une première section (410) configurée pour afficher une pluralité de points de référence, POR, correspondant à différentes données d'entrée (101, 201) et pour recevoir une première entrée utilisateur consistant à sélectionner un premier POR correspondant aux premières données d'entrée parmi la pluralité de POR;
une deuxième section (420) configurée pour afficher les premières données d'entrée (101, 201) correspondant à la première entrée utilisateur et pour recevoir une deuxième entrée utilisateur de modification des premières données d'entrée (101, 201);
une troisième section (430) configurée pour afficher les premières données de sortie (202) sur la base de la première fonction (210);
une quatrième section (440) configurée pour afficher une condition réglable et pour recevoir une troisième entrée utilisateur de réglage de la première condition cible (203); et
une cinquième section (450) configurée pour afficher des données d'entrée recommandées comprenant les deuxièmes données d'entrée sur la base de la deuxième fonction (220).

8. Procédé selon la revendication 7, dans lequel la troisième section (430) comprend un premier graphique représentant les premières données de sortie (202) selon les premières données d'entrée (101, 201), et en réponse à la modification des premières données d'entrée (101, 201) selon la deuxième entrée utilisateur, les premières données de sortie (202) sont modifiées sur la base de la première fonction (210), et le premier graphique est mis à jour sur la base des premières données d'entrée modifiées et des premières données de sortie modifiées, ou
dans lequel la cinquième section (450) comprend un deuxième graphique représentant un degré de réalisation des objectifs et d'incertitude de chaque donnée d'entrée recommandée, et en réponse à la sélection dans le deuxième graphique de données d'entrée recommandées correspondant aux deuxièmes données d'entrée, la deuxième section (420) et la troisième section (430) sont mises à jour sur la base des deuxièmes données d'entrée.

9. Appareil (100, 700) avec exploration de données pour optimiser la conception et le développement de processus d'un produit semi-conducteur, comprenant:
un ou plusieurs processeurs (710) configurés pour:

spécifier une forme souhaitée du produit à fabriquer et dériver des informations sur une valeur maximale d'une fonction objectif (230);
définir des premières données d'entrée (101, 201) et une première condition cible (102, 203) sur la base d'une première entrée utilisateur appliquée via une interface utilisateur (400);
prédire des premières données de sortie (202) correspondant aux premières données d'entrée (101, 201) à l'aide d'une première fonction (210) qui modélise la fonction objectif;
afficher les premières données de sortie (202) via l'interface utilisateur (400);
déterminer les données d'entrée recommandées à l'aide d'une deuxième fonction fondée sur la cible (220) qui fournit un résultat de comparaison entre les premières données de sortie (202) et la première condition cible (102, 203), dans lequel la deuxième fonction (220) comprend un premier composant correspondant à une différence entre une valeur moyenne des premières données de sortie (202) et la première condition cible (203) et une deuxième composante correspondant à une valeur d'écart type des premières données de sortie (202) de telle sorte que la deuxième fonction fondée sur une cible (220) soit définie comme une erreur quadratique attendue, ESE;
afficher les données d'entrée recommandées via l'interface utilisateur (400);
déterminer les deuxièmes données d'entrée sur la base d'une deuxième entrée utilisateur appliquée via l'interface utilisateur (400); et
effectuer de manière itérative les actions précédentes (220).

10. Appareil (100, 700) selon la revendication 9, dans lequel
la première condition cible (102, 203) comprend une première valeur cible, et pour déterminer les deuxièmes données d'entrée, le ou les processeurs (710) sont configurés pour déterminer, comme deuxièmes données d'entrée, des données d'entrée qui dérivent, à l'aide de la première fonction (210), des données de sortie plus proches de la valeur cible que les premières données de sortie (102, 203).

**11.** Appareil (100, 700) selon la revendication 9, dans lequel
la première condition cible (102, 203) comprend une première plage cible, et pour déterminer les deuxièmes données d'entrée, le ou les processeurs (710) sont configurés pour déterminer, comme deuxièmes données d'entrée, des données d'entrée qui dérivent, à l'aide de la première fonction (210), des données de sortie dans la première plage cible en réponse au fait que les premières données de sortie (202) ne se trouvent pas dans la première plage cible.

**12.** Appareil (100, 700) selon l'une des revendications 9 à 11, dans lequel
pour déterminer la deuxième donnée d'entrée, le ou les processeurs (710) sont configurés pour déterminer la deuxième donnée d'entrée en appliquant des pondérations différentes à la première composante et à la deuxième composante.

**13.** Support de stockage non transitoire lisible par ordinateur stockant des instructions qui, lorsqu'elles sont exécutées par un ou plusieurs processeurs (710), configurent le ou les processeurs (710) pour exécuter un procédé mis en œuvre par processeur avec exploration de données pour optimiser la conception et le développement de processus d'un produit semi-conducteur selon l'une quelconque des revendications 1 à 8.

Input data
<u>101</u>

Target condition
<u>102</u>

Data exploration
apparatus
<u>100</u>

Recommended
input data
<u>103</u>

FIG. 1

FIG. 2

```
        ┌─────────────┐
        │    Start    │
        └─────────────┘
               │
               ▼
     ┌──────────────────────┐
     │    Set input data    │◄──────┐
     │         310          │       │
     └──────────────────────┘       │
               │                    │
               ▼                    │
     ┌──────────────────────┐       │
     │  Set target condition│       │
     │         320          │       │
     └──────────────────────┘       │
               │                    │
               ▼                    │
     ┌──────────────────────┐       │
     │     Calculate ESE    │       │
     │         330          │       │
     └──────────────────────┘       │
               │                    │
               ▼                    │
     ┌──────────────────────┐       │
     │ Perform optimization │───────┘
     │         340          │
     └──────────────────────┘
```

# FIG. 3

FIG. 4

EP 4 141 707 B1

FIG. 5

```
                          ┌─────────────┐
                          │    Start    │
                          └──────┬──────┘
                                 │                          ┌─ 610
                                 ▼
    ┌────────────────────────────────────────────────────────────┐
    │          Set first input data and first target condition     │
    └────────────────────────────┬───────────────────────────────┘
                                 │                          ┌─ 620
                                 ▼
    ┌────────────────────────────────────────────────────────────┐
    │     Predict first output data corresponding to first input data │
    │        using first function that models objective function   │
    └────────────────────────────┬───────────────────────────────┘
                                 │                          ┌─ 630
                                 ▼
    ┌────────────────────────────────────────────────────────────┐
    │  Determine second input data using second function that provides result │
    │    of comparison between first output data and first target condition │
    └────────────────────────────┬───────────────────────────────┘
                                 │
                                 ▼
                          ┌─────────────┐
                          │     End     │
                          └─────────────┘
```

# FIG. 6

Data exploration apparatus 700

| Processor 710 | Memory 720 |

FIG. 7

800

810     820     830

| Processor | Memory | Camera |

880

| Storage device | Input device | Output device | Network interface |

840     850     860     870

FIG. 8

**EP 4 141 707 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUE YONGHAO et al.** User interfaces for high-dimensional design problems from theories to implementations. *Adjunct Proceedings Of The 29th ACM Conference On User Modeling, Adaptation And Personalization, ACMPUB27*, 09 August 2021, ISSN 978-1-4503-8376-9, 1-34